# EUROPEAN PATENT APPLICATION

(11) **EP 2 567 772 A2**
(43) Date of publication of application: **13.03.2013**
(21) Application number: 12182780.2
(22) Date of filing: 03.09.2012
(51) Int. Cl.: B23K 20/12, F04C 15/00

(54) **Friction bonding structure and pump device**

(30) Priority: 12.09.2011 JP 2011198539
(71) Applicant: JTEKT CORPORATION, Osaka-shi Osaka 542-8502 (JP)
(72) Inventor: Toyama, Yuichi, Osaka-shi,, Osaka 542-8502 (JP)
(74) Representative: TBK

(57) **Abstract**

An annular groove (21) is formed at an open end of a motor case (5), and a sliding contact projection (22), which is in an annular plate-shape and corresponding to the annular groove (21), is formed on a cover (8). A bottom of the annular groove (21) and the sliding contact projection (22) rotate relative to each other while being in sliding contact with each other to form an annular friction bonded portion (25) therebetween. Wall portions (26, 27) of the annular groove (21) are arranged at such positions as to be concentric with the friction bonded portion (25). Thus, a storage portion (28) that stores burrs (30) produced at the friction bonded portion (25) is formed. A plurality of protrusions (29) that protrude radially outward is formed on the sliding contact projection (22) over all around. The storage portion (28, 28a) is partitioned in the circumferential direction by using the protrusions (29) as partitioning elements.

## Description

### BACKGROUND OF THE INVENTION

### 1. Field of the Invention

The invention relates to a friction bonding structure and a pump device.

### 2. Discussion of Background

There are conventional methods of bonding contact portions of two members together by utilizing frictional heat generated between the two members. Such methods include, for example, ultrasonic welding and spin welding. Employment of such friction bonding provides a bonded portion, at which the two members are bonded together, with high sealing performance.

However, if the meltage is increased in order to ensure high sealing performance, the amount of products of melting, which stick out from the bonded portion, that is, the amount of "burrs" also increases. Japanese Patent Application Publication No. 2005-81351 (JP 2005-81351 A) describes that a storage portion for storing burrs is formed near a friction bonded portion.

However, in the case of spin welding in which two members to be bonded together are rotated relative to each other while being in contact with each other, produced burrs may revolve within the storage portion. Therefore, there is a possibility that the burrs will accumulate at one location and stick out of the storage portion.

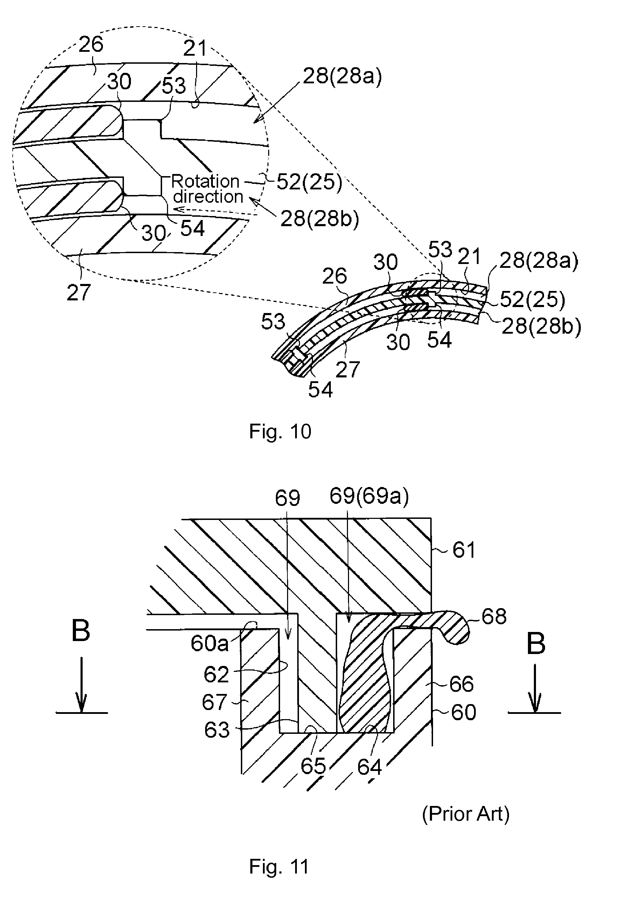

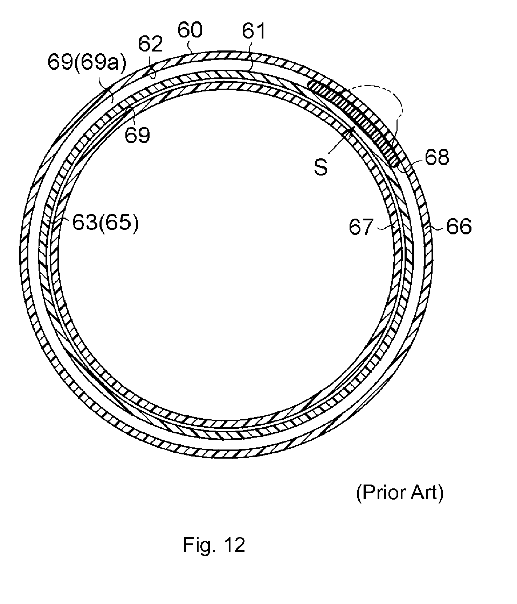

FIG. 11 and FIG. 12 show a related art. FIG. 11 is a sectional view that shows a conventional friction bonding structure. FIG. 12 is a sectional view taken along the line B-B in FIG. 11. A lid 61 formed in a disc shape is attached to an open end 60a of a cylinder 60 formed in a generally cylindrical shape, and the lid 61 and the cylinder 60 are frictionally bonded together. An annular groove 62 is formed at the open end 60a of the cylinder 60. A sliding contact projection 63 in an annular plate shape is formed on the lid 61. The sliding contact projection 63 corresponds to the annular groove 62. Then, the cylinder 60 and the lid 61 are rotated relative to each other with the distal end of the sliding contact projection 63 in sliding contact with a bottom 64 of the annular groove 62. In this way, a friction bonded portion 65 is formed at the sliding contact portions.

In addition, wall portions 66, 67 of the annular groove 62 are arranged concentrically with the sliding contact projection 63 that constitutes the friction bonded portion 65. Thus, annular storage portions 69 are formed between the sliding contact projection 63 and the wall portions 66, 67. Burrs 68 produced at the friction bonded portion 65 are stored in the storage portions 69. In this example, because most of the produced burrs 68 stick out from the friction bonded portion 65 radially outward, an outer storage portion 69a, which is one of the storage portions 69, is set wider than the other one of the storage portions 69.

However, in many cases, a narrow-width portion S is formed in the thus formed storage portion 69 depending on the roundness of the sliding contact projection 63 and the annular groove 62 or the coaxiality between the sliding contact projection 63 and the annular groove 62. If the burrs 68 accumulate at the narrow-width portion S, the burrs 68 stick out of the storage portion 69 (69a).

In order to prevent the burrs 68 from sticking out of the storage portion 69 (69a), for example, the size of the storage portion 69 (69a) may be increased or the meltage may be optimized to suppress production of the burrs 68. However, an increase in the size of the storage portion 69 causes an increase in the size of a device. Also, in order to optimize the meltage resulting from friction bonding, it is necessary to carry out strict tolerance management for components of the device. This may cause cost increase.

### SUMMARY OF THE INVENTION

The invention provides a friction bonding structure and a pump device with which the sticking-out of burrs is suppressed without the need for an increase in the size of a storage portion or strict tolerance management.

According to a feature of an example of the invention, there is provided a plurality of partitioning elements that partition a storage portion in the circumferential direction to disperse burrs in the circumferential direction.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a sectional view that shows the schematic configuration of an electric pump device according to a first embodiment of the invention;
FIG. 2 is a perspective view of a portion of a motor case near an open end;
FIG. 3 is a perspective view of a cover;
FIG. 4 is a partial sectional view that shows a state where the cover is attached to the open end of the motor case;
FIG. 5 is a sectional view taken along the line A-A in FIG. 1;
FIG. 6 is a partial sectional view that shows a friction bonding structure according to a second embodiment of the invention;
FIG. 7 is a sectional view that shows a friction bonding structure according to a third embodiment of the invention;
FIG. 8 is a sectional view that shows a friction bonding structure according to a fourth embodiment of the invention;
FIG. 9 is a sectional view that shows a friction bonding structure according to a fifth embodiment of the invention;
FIG. 10 is a sectional view that shows a friction bonding structure according to a sixth embodiment of the invention;
FIG. 11 is a partial sectional view that schematically shows a conventional friction bonding structure and the sticking-out of burrs; and
FIG. 12 is a sectional view taken along the line B-B in FIG. 11.

### DETAILED DESCRIPTION OF EMBODIMENTS

Hereinafter, embodiments of the invention will be described with reference to the accompanying drawings.

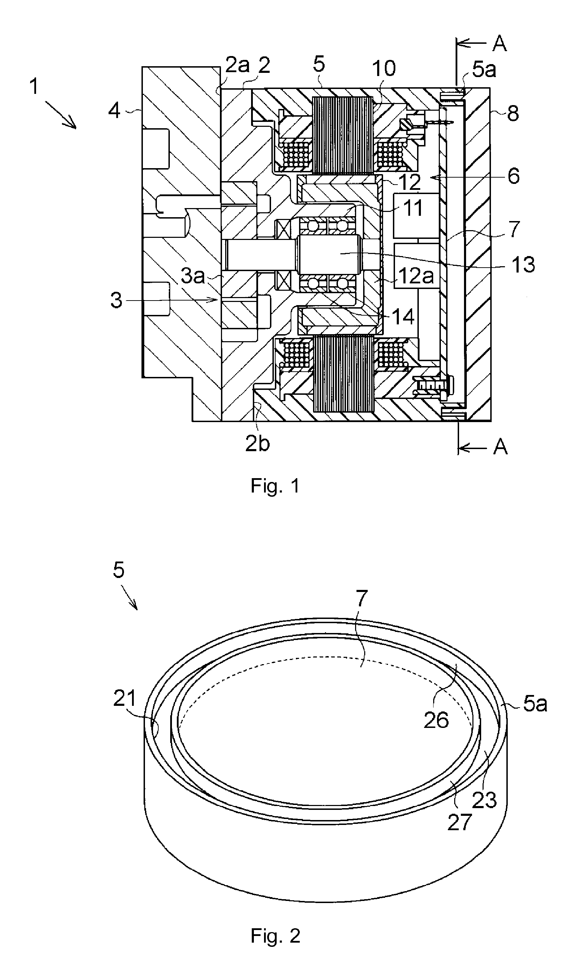

An electric pump device 1 according to a first embodiment of the invention will be described with reference to the accompanying drawings. As shown in FIG. 1, the electric pump device 1 includes a pump mechanism (gear pump) 3 and a pump plate 4. The pump mechanism 3 is accommodated in a pump case 2. The pump plate 4 is attached to one end (left-side end face 2a in FIG. 1) of the pump case 2, and constitutes a suction portion and discharge portion of the pump mechanism 3. In addition, a motor case 5 formed in a generally cylindrical shape is fixed to the other end (right-side end face 2b in FIG. 1) of the pump case 2, and accommodates a motor 6 that serves as a drive source and a control board 7 for the motor 6. A cover 8 formed in a generally disc shape is attached to an open end 5a of the motor case 5.

The motor case 5 is integrally formed with a stator 10 of the motor 6 by resin molding. The control board 7 is accommodated in the motor case 5, at a position near the open end 5a. In addition, a cylindrical support portion 11 is coaxially arranged inside the cylindrical motor case 5. The support portion 11 is formed to project from the end face 2b of the pump case 2. A rotor 12 of the motor 6 is fixed to a motor shaft 13 that is passed through the support portion 11. As a result, the rotor 12 is arranged radially inward of the stator 10.

The motor shaft 13 is rotatably supported by a bearing 14 provided at the support portion 11. In addition, the rotor 12 is formed in a closed-end cylindrical shape, and is arranged in the cylindrical motor case 5 so as to surround the radially outer side of the support portion 11. One end of the motor shaft 13 is fixed to a bottom 12a of the rotor 12. As a result, the rotor 12 is coupled to an inner gear 3a of the pump mechanism 3 via the motor shaft 13.

As well as the motor case 5, the cover 8 in the present embodiment is made of resin (e.g. polyamide). The cover 8 is frictionally bonded to the open end 5a of the motor case 5. In this way, the liquid-tightness of the inside of the cylindrical motor case 5 is ensured.

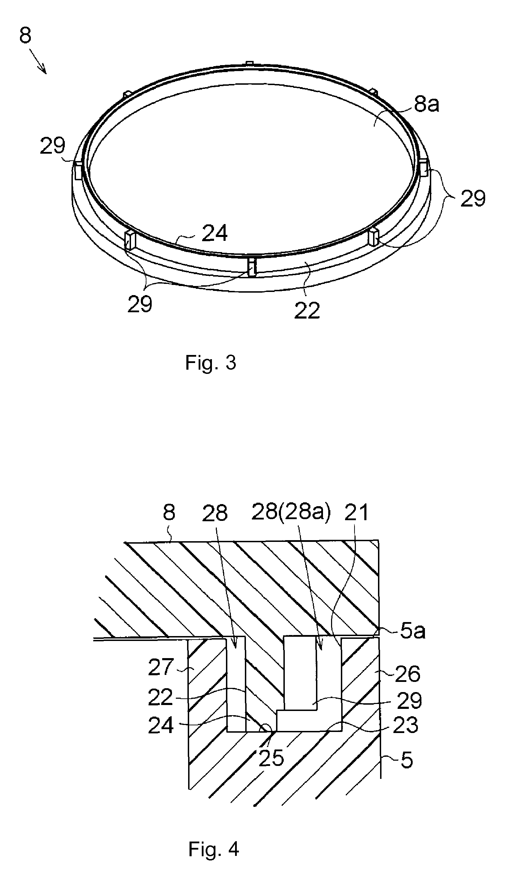

As shown in FIG. 2, an annular groove 21 is formed at the open end 5a of the motor case 5. The annular groove 21 is open in the axial direction (upward in FIG. 2). In addition, as shown in FIG. 3, a sliding contact projection 22 in an annular plate shape is formed on a mounting surface 8a of the cover 8. The sliding contact projection 22 corresponds to the annular groove 21. As shown in FIG. 4, the cover 8 is attached to the open end 5a of the motor case 5 by inserting the sliding contact projection 22 of the cover 8 into the annular groove 21 and bringing the distal end of the sliding contact projection 22 into contact with a bottom 23 of the annular groove 21.

In the present embodiment, the cover 8 is rotated with the sliding contact projection 22 in contact with the bottom 23 of the annular groove 21. At this time, the motor case 5 is fixed so as to be non-rotatable. Then, by rotating the cover 8 relative to the motor case 5, the cover 8 is frictionally bonded (spin-welded) to the open end 5a of the motor case 5.

As shown in FIG. 3 and FIG. 4, a melting portion 24 is formed at the distal end of the sliding contact projection 22. The melting portion 24 is formed such that the width of the melting portion 24 is smaller than that of the other portion of the sliding contact projection 22. The melting portion 24 and the bottom 23 of the annular groove 21, which are melted by the frictional heat, are welded to each other. As a result, an annular friction bonded portion 25 is formed.

Wall portions 26, 27 of the annular groove 21 are arranged so as to be coaxial with the friction bonded portion 25. In the present embodiment, clearances formed between the wall portions 26, 27, which may function as annular walls, and the friction bonded portion 25 are used as storage portions 28, and products of melting, which stick out from the friction bonded portion 25, that is, "burrs", are stored in the storage portions 28.

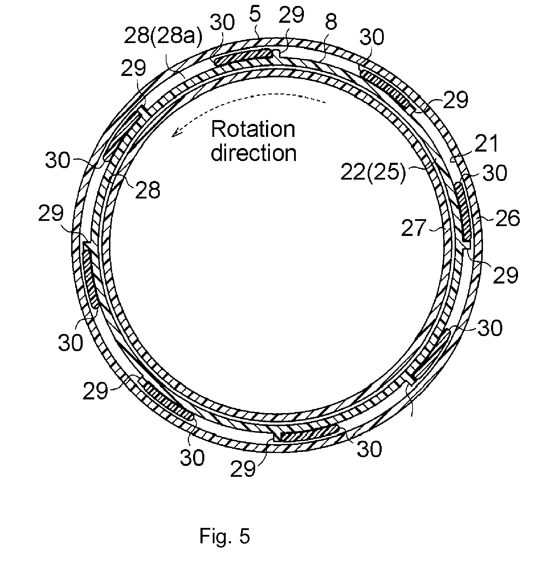

As shown in FIG. 3, a plurality of protrusions 29 is formed on the sliding contact projection 22. The protrusions 29 protrude from the sliding contact projection 22 radially outward. Specifically, each protrusion 29 is formed in a plate-shape, and extends in the axial direction. As shown in FIG. 5, the protrusions 29 are arranged in the annular groove 21 together with the sliding contact projection 22 that will be the friction bonded portion 25. A storage portion 28a, which is one of the storage portions 28 and which is formed between the sliding contact projection 22 and the wall portion 26 that surrounds the radially outer side of the sliding contact projection 22, is partitioned in the circumferential direction by the protrusions 29.

During friction bonding, burrs 30 produced at the friction bonded portion 25 adhere to the corresponding protrusions 29, located downstream of burr produced points in the rotation direction, as the sliding contact projection 22 (cover 8) rotates (in the counterclockwise direction in the example shown in FIG. 5). As a result, the burrs 30 adhere to the protrusions 29, which may function as partitioning elements, and therefore the burrs 30 are stored in the storage portion 28a while being dispersed in the circumferential direction.

According to the present embodiment, the following advantageous effects are obtained.

With the above-described simple configuration, it is possible to avoid accumulation of the produced burrs 30 at one location inside the storage portion 28. As a result, it is possible to suppress the sticking-out of the burrs 30 to the outside of the storage portion 28 without the need for an increase in the size of the storage portion 28 or strict tolerance management for the motor case 5 and the cover 8.

The motor case 5 and the cover 8 both are made of resin. Therefore, the burrs 30 produced through melting of resin tend to be light and bulky. Therefore, the burrs 30 tend to revolve inside the storage portions 28 due to the rotation of the cover 8, and the sticking-out of the burrs 30 to the outside of the storage portion 28a tends to occur due to the accumulation of the burrs 30. Therefore, by applying the configuration according to the present embodiment, it is possible to obtain remarkable advantageous effects. In addition, such friction bonding between resin members is widely adopted for cases of electronic devices because a melting temperature of resin is low.

The partitioning elements are formed of the protrusions 29 formed on the sliding contact projection 22. Therefore, the protrusions 29, which may function as the partitioning elements, rotate together with the sliding contact projection 22. That is, the protrusions 29 are located next to the friction bonded portion 25, so the produced burrs 30 easily adhere to the protrusions 29. As a result, it is possible to disperse the burrs 30 in the storage portion 28a in the circumferential direction.

The protrusions 29 are formed to protrude radially outward from the sliding contact projection 22. Thus, the protrusion 29, which may function as the partitioning elements, are arranged in the storage portion 28a between the sliding contact projection 22 and the wall portion 26 that surrounds the radially outer side of the sliding contact projection 22. Usually, the burrs 30 produced at the friction bonded portion 25 mostly stick out from the friction bonded portion 25 radially outward by centrifugal force. Therefore, with the above configuration, it is possible to further effectively suppress the sticking-out of the burrs 30.

Next, an electric pump device according to a second embodiment of the invention will be described with reference to the accompanying drawings. Note that, for the sake of convenience, the same components as those in the first embodiment will be denoted by the same reference numerals as those in the first embodiment, and the description thereof is omitted.

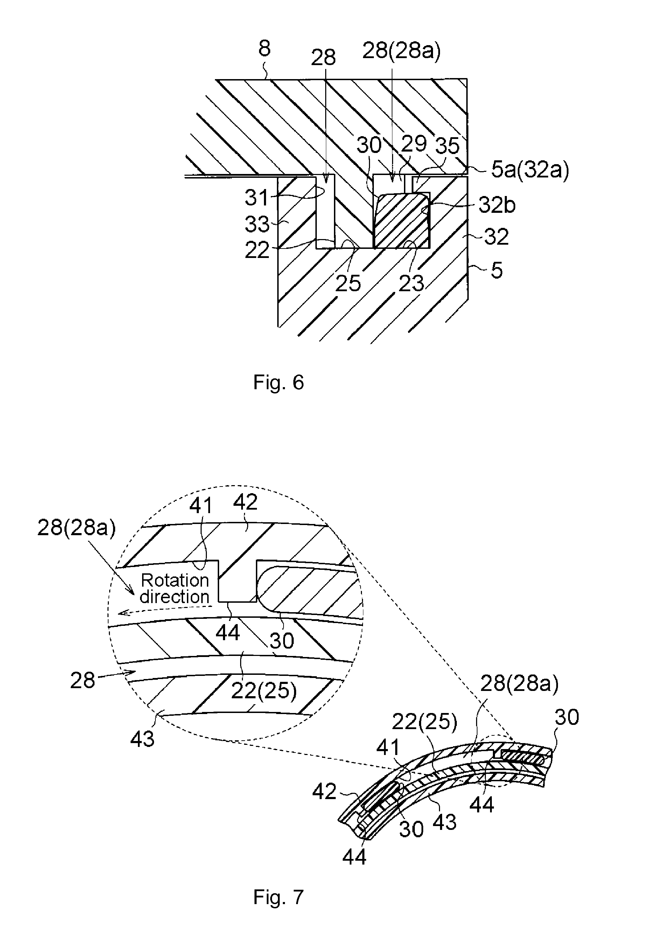

As shown in FIG. 6, in the present embodiment, a flange 35 is formed at a distal end 32a of a wall portion 32, which is one of wall portions 32, 33 of an annular groove 31 and which is located on the radially outer side (right side in FIG. 6) of the wall portion 33. The annular groove 31 is formed at the open end 5a of the motor case 5. The flange 35 extends radially inward (toward the left side in FIG. 6), and is formed along the entire circumference of the wall portion 32.

The sticking-out of the burrs 30 occurs when the burrs 30 are accumulated along a wall face 32b of the wall portion 32 within the storage portion 28a and climb over the wall portion 32. On the basis of this, in the present embodiment, the flange 35 that projects from the distal end 32a of the wall portion 32 into the storage portion 28a is formed to cover the upper side of the wall face 32b. In this way, the burrs 30 accumulated along the wall face 32b are retained within the storage portion 28a by the flange 35.

According to the second embodiment described above, it is possible to efficiently store the produced burrs 30 within the storage portion 28a. Therefore, it is possible to reduce the volume of the storage portion 28a by utilizing the high storage efficiency. Specifically, it is possible to make the depth of the annular groove 31 that forms the storage portion 28a less than the depth of the annular groove 21 in the first embodiment (make the height of the wall portion 32 less than the height of the wall portion 26 in the first embodiment). As a result, it is possible to further reduce the size of the storage portion.

Note that the above-described embodiments may be modified as follows. In the above-described embodiments, the invention is applied to the electric pump device 1, more specifically, the friction bonding structure for frictionally bonding the motor case 5 and the cover 8 together. However, the application of the invention is not limited to this. As long as two members are frictionally bonded together, the invention may be applied to any members. Therefore, the invention may be applied to, for example, a pump device that is driven through a pulley, or the like, or may be applied to a device other than a pump device.

In the above-described embodiments, the protrusions 29 are formed on the sliding contact projection 22, and the storage portion 28 (28a) are partitioned in the circumferential direction by the protrusions 29 that may function as the partitioning elements. However, the invention is not limited to this configuration. For example, according to a third embodiment of the invention, as shown in FIG. 7, a plurality of protrusions 44 that protrude radially inward is formed on a wall portion 42, which is one of wall portions 42, 43 of an annular groove 41 and which is located radially outward of the wall portion 43, and the storage portion 28 (28a) is partitioned in the circumferential direction by the protrusions 44 that may function as partitioning elements. With this configuration as well as with the configurations in the first and second embodiments, the burrs 30 are stored in the storage portion 28 while being dispersed in the circumferential direction.

Note that, the configuration in which the protrusions 29 are formed on the sliding contact projection 22 of the cover 8 as in the first and second embodiments has advantage over the configuration in the third embodiment, in that it is easy to form the protrusions 29 and it is possible to arrange the protrusions 29, which may function as the partitioning elements, at positions near the friction bonded portion 25 without contact between the protrusions 29 and the friction bonded portion 25.

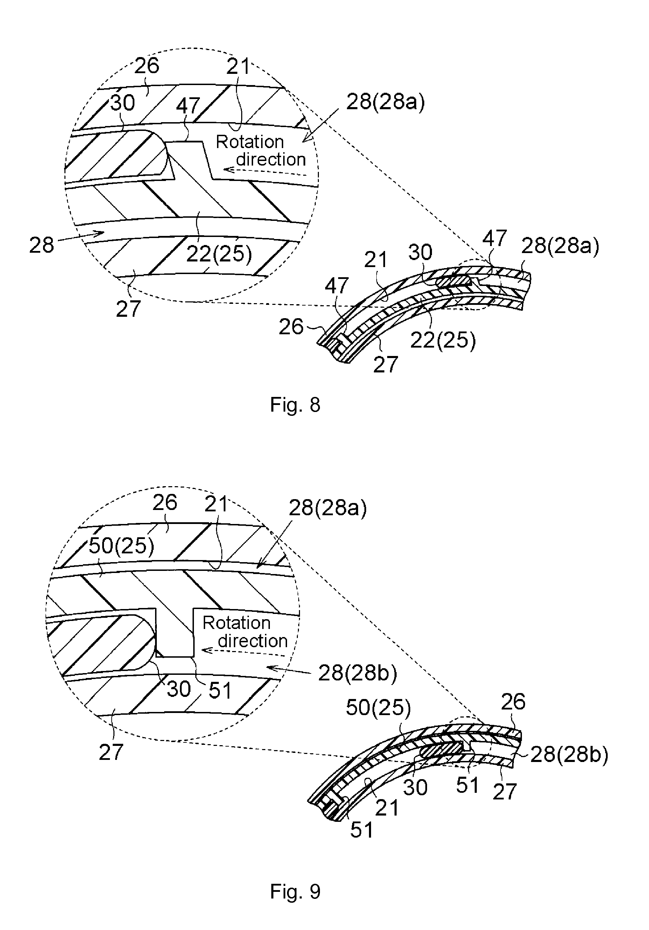

According to a fourth embodiment of the invention shown in FIG. 8, the distal ends of protrusions 47, which may function as partitioning elements, may be inclined in the direction of relative rotation between two members to be frictionally bonded together. Because the protrusions 47 are formed on the sliding contact projection 22 of the cover 8, the distal ends of the protrusions 47 are inclined in the rotation direction (counterclockwise direction in FIG. 8) of the cover 8. With this configuration, it is possible to further reliably cause the burrs 30 to adhere to the protrusions 47.

When protrusions, which may function as partitioning elements, are formed on (a wall portion of) the motor case 5 that is in sliding contact with the rotating cover 8 in a fixed state, the direction opposite to the rotation direction of the cover 8 is the "relative rotation direction". Therefore, for example, if the configuration in the third embodiment shown in FIG. 7 is employed as the base configuration, the distal ends of the protrusions 44 need to be inclined in the clockwise direction.

In the first and second embodiments and the third and fourth embodiments shown in FIG. 7 and FIG. 8, the protrusions (29, 44 or 47), which may function as partitioning elements, are arranged in the storage portion 28a located radially outward of the friction bonded portion 25. However, the invention is not limited to this configuration. When the burrs 30 tend to be produced on the radially inner side of the friction bonded portion 25, as according to a fifth embodiment of the invention shown in FIG. 9, a plurality of protrusions 51 that protrude radially inward is formed over all around a sliding contact projection 50. The storage portion 28b is partitioned in the circumferential direction by the protrusions 51 that may function as partitioning elements.

According to a sixth embodiment of the invention, partitioning elements are arranged in both the storage portions 28a, 28b located on the radially outward and inward of the friction bonded portion 25, respectively. As shown in FIG. 10, a plurality of protrusions 53 and a plurality of protrusions 54 are formed radially outward and inward of a sliding contact projection 52, respectively. The storage portion 28a and the storage portion 28b located radially outward and inward of the friction bonded portion 25 are partitioned in the circumferential direction by the protrusions 53 and the protrusions 54, which may function as partitioning elements, respectively. Alternatively, a plurality of protrusions is formed on at least one of the wall portions of the annular groove so that at least one of partitioning elements arranged in the outer-side storage portion 28a and partitioning elements arranged in the inner-side storage portion 28b are formed of the protrusions formed on the at least one of the wall portions.

In the above-described embodiments, friction bonding is performed by bringing the rotating cover 8 into sliding contact with the open end 5a of the motor case 5 in a fixed state. However, the invention is not limited to this configuration. As long as two members to be frictionally bonded together are allowed to rotate relative to each other while being in sliding contact with each other, any two members may be used.

In the above-described embodiments, the annular groove 21 is formed at the open end 5a of the motor case 5, and thus the motor case 5 is used as a first member that has the wall portions 26, 27 as annular walls. The sliding contact projection 22 is formed on the cover 8 that may function as a second member. However, for example, when the cover is attached to the motor case from the lower side in the direction of gravitational force, an annular groove is formed in the cover and the wall portions of the annular groove are used as annular walls. Further, a sliding contact projection is formed on the motor case. In this case, the cover may function as a first member, and the motor case may function as a second member.

Furthermore, when an annular wall is provided and a burr storage portion is formed between the annular wall and a friction bonded portion, an annular groove need not be formed.

In the above-described embodiments, the motor case 5 and the cover 8 both are made of resin. However, the invention is not limited to this configuration. It is desirable that at least the sliding contact portions (the melting portion 24 at the distal end of the sliding contact projection 22 and the bottom 23 of the annular groove 21) should be made of resin. Note that resin other than polyamide may be used. Further, as long as friction bonding is allowed, both the motor case and the cover may be made of metal.
An annular groove (21) is formed at an open end of a motor case (5), and a sliding contact projection (22), which is in an annular plate-shape and corresponding to the annular groove (21), is formed on a cover (8). A bottom of the annular groove (21) and the sliding contact projection (22) rotate relative to each other while being in sliding contact with each other to form an annular friction bonded portion (25) therebetween. Wall portions (26, 27) of the annular groove (21) are arranged at such positions as to be concentric with the friction bonded portion (25). Thus, a storage portion (28) that stores burrs (30) produced at the friction bonded portion (25) is formed. A plurality of protrusions (29) that protrude radially outward is formed on the sliding contact projection (22) over all around. The storage portion (28, 28a) is partitioned in the circumferential direction by using the protrusions (29) as partitioning elements.

## Claims

1. A friction bonding structure in which an annular friction bonded portion is formed between two members by rotating the two members relative to each other with the two members in contact with each other, and an annular wall is arranged at such a position as to be concentric with the friction bonded portion to form a storage portion between the annular wall and the friction bonded portion so that burrs are stored in the storage portion, **characterized by** comprising:
a plurality of partitioning elements that partition the storage portion in a circumferential direction to disperse the burrs in the circumferential direction.

2. The friction bonding structure according to claim 1, wherein at least sliding contact portions of the two members are made of resin.

3. The friction bonding structure according to claim 1 or 2, wherein:
the two members are a first member that has the annular wall and a second member that has an annular sliding contact projection that is in sliding contact with the first member and is arranged at such a position as to be concentric with the annular wall; and
the partitioning elements are a plurality of protrusions that are formed on at least one of the annular wall and the sliding contact projection and that protrude radially.

4. The friction bonding structure according to claim 3, wherein distal ends of the protrusions are inclined in a direction of relative rotation between the two members.

5. The friction bonding structure according to any one of claims 1 to 4, wherein:
the two members are frictionally bonded together by rotating one of the two members with the other one of the two members fixed; and
the partitioning elements are formed on the one of the two members that is rotated.

6. The friction bonding structure according to any one of claims 1 to 5, wherein a flange that extends into the storage portion is formed at a distal end of the annular wall.

7. The friction bonding structure according to any one of claims 1 to 6, wherein the partitioning elements are arranged in the storage portion that is formed on radially outward of the friction bonded portion.

8. A pump device, comprising the friction bonding structure according to any one of claims 1 to 7.
